**Europäisches Patentamt**

**European Patent Office**

**Office européen des brevets**

(11) Veröffentlichungsnummer: **0 059 950**
**B1**

(12) **EUROPÄISCHE PATENTSCHRIFT**

(45) Veröffentlichungstag der Patentschrift:
**04.09.85**

(21) Anmeldenummer: **82101736.5**

(22) Anmeldetag: **05.03.82**

(51) Int. Cl.⁴: **A 01 D 17/10,** B 65 G 23/04,
B 65 G 39/04

(54) **Kartoffelerntemaschine.**

(30) Priorität: **11.03.81 DE 3109209**
**16.01.82 DE 3201260**

(43) Veröffentlichungstag der Anmeldung:
**15.09.82 Patentblatt 82/37**

(45) Bekanntmachung des Hinweises auf die Patenterteilung:
**04.09.85 Patentblatt 85/36**

(84) Benannte Vertragsstaaten:
**AT BE CH DE FR GB LI NL SE**

(56) Entgegenhaltungen:
**DE - A - 2 326 452**
**DE - B - 1 174 556**
**DE - B - 1 247 729**
**US - A - 4 034 837**

**Ersatzteilliste für Kartoffel-Vollernter DNII, Ausgabe
1979, Grimme, Frans Grimme Landmaschinenfabrik,
2845 Dammer**

(73) Patentinhaber: **Franz Grimme Landmaschinenfabrik
GmbH & Co. KG., D-2845 Damme (DE)**

(72) Erfinder: **Grimme, Franz Heinrich, Alter Schulweg 11,
D-2845 Damme/Dümmer (DE)**
Erfinder: **Brintrup, Hermann-Josef, Haferkamp 18,
D-2845 Damme/Dümmer (DE)**

(74) Vertreter: **Busse & Busse Patentanwälte,
Postfach 1226 Grosshandelsring 6, D-4500 Osnabrück
(DE)**

## Beschreibung

Die Erfindung betrifft eine Kartoffelerntemaschine nach dem Oberbegriff des Anspruchs 1. Bei bekannten Maschinen dieser Art besteht die rückwärtige Umlenkvorrichtung aus einem walzenförmigen Antriebskorb, der an stirnseitigen Endscheiben angeschweisste axiale Korbstäbe aufweist, welche die Abstützung für das Siebförderband im Umlenkbereich bilden. Der Winkelabstand der Korbstäbe ist auf den Abstand der Querstäbe des Siebförderbandes abgestimmt, und bei Umlaufen des Antriebskorbes greifen die Korbstäbe in die Lücken zwischen die Querstäbe des Siebförderbandes ein, wobei jeweils ein Korbstab einen Querstab des Siebförderbandes als Antriebsmitnehmer hintergreift. Im umlaufenen Umlenkbereich wirken dabei die Korbstäbe zugleich als Füllstäbe, welche den freien Abstand zwischen den Querstäben des Siebförderbandes verringern. Zusätzliche, nicht als Antriebsmitnehmer wirkende, längslaufende Füllstäbe des Antriebskorbes können dazu vorgesehen sein, Durchtrittsspalte durch Überbrückung des lichten Abstands zwischen benachbarten Stäben im Umlenkbereich zu verringern.

Eine derartige Umlenkvorrichtung bedingt im Betrieb der Maschine eine erhebliche Geräuschentwicklung und verursacht am Siebförderband, insbesondere an dessen Querstäben, fortschreitend Verschleiss, wobei die Korbstäbe ihrerseits Verschleiss unterliegen. Auch bei genauer Abstimmung der Umfangsabstände der Korbstäbe auf die Querstäbe des Siebförderbandes kommt es immer wieder vor, dass die Querstäbe des Siebförderbandes auf die Korbstäbe auflaufen und Rattererscheinungen auftreten. Auch das Zusammenwirken des rückwärtigen Umlenkendes des Siebförderbandes mit einer diesem nachgeordneten, angefederten Krautzupfwalze ist bei Ausbildung der rückwärtigen Umlenkvorrichtung in Gestalt eines Antriebskorbes vielfach unbefriedigend, zumal bei einem Auflaufen der Querstäbe des Siebförderbandes auf die Korbstäbe die Krautzupfwalze ihrerseits über die Querstäbe rattert, in ihrer Wirkung herabgesetzt wird und Verschleiss in ihrer Walzenlagerung und ihren Andruckmitteln erfährt.

Die Erfindung schafft hier Abhilfe mit den Merkmalen des kennzeichnenden Teils des Anspruchs 1. Hinsichtlich weiterer Ausgestaltungen wird auf die Ansprüche 2 bis 13 verwiesen.

Die am Umfang mit einem Mantel aus nachgiebigem Material versehene Trommel sichert bei geräuscharmem, ruhigem Lauf eine sichere Mitnahme der mit ihrem Mantel in Eingriff gelangenden Querstäbe des Siebförderbandes, die sich im Umlenkbereich fest auf den Mantel auflegen und in diesen eindrücken. Der Mantel verschliesst die Zwischenräume zwischen den Querstäben des Siebförderbandes vollständig und erlaubt ein genaues und direktes Anstellen einer Krautzupfwalze an das zugehörige Umlenkende des Siebförderbandes, so dass ein verbessertes, zugleich von Rattererscheinungen freies Arbeiten der Krautzupfwalze gegeben ist. Die besonders gute und gleichmässige Unterstützung der Querstäbe wirkt Verbiegeerscheinungen entgegen, so dass die Verwendung von relativ dünneren Querstäben möglich ist. Gleichzeitig unterliegen die Teile des Siebförderbandes ebenso wie die einer etwa nachgeordneten Krautzupfwalze wesentlich geringeren Beanspruchungen mit der Folge einer wesentlich höheren Lebensdauer. In Fällen, in denen Siebförderbänder gegen solche einer anderen Stabteilung ausgewechselt werden müssen, um unterschiedlichen Bedingungen des Erntevorganges Rechnung zu tragen, kann dies besonders leicht und einfach geschehen, da die rückwärtige Umlenkvorrichtung, welche die Antriebsaufgaben für das Siebförderband übernimmt, nicht ihrerseits anpassungshalber mit ausgewechselt werden muss. Da die Trommel mit ihrem auf ihr angebrachten Mantel eine recht hohe Antriebswirkung auf das Siebförderband ausübt, können in vielen Fällen die aussenliegenden Tragriemen eine von Mitnahmenocken freie Unterseite aufweisen. Die Umlenkvorrichtung an der Kartoffelerntemaschine nach der Erfindung trägt beliebigen Austauschmöglichkeiten von Siebförderbändern insbesondere auch dadurch Rechnung, dass die Trommeln an ihren beiden Enden mit einer koaxialen, je von einem aussenliegenden Tragriemen umlaufenen Umlenkscheibe versehen ist, die als auswechselbares Teil an den Enden der Trommel anflanschbar ist. Dies eröffnet die Möglichkeit, in besonderen Fällen zur Anpassung an die jeweilige Ausbildung der Tragriemen lediglich die Umlenkscheiben mit auszuwechseln, während die Trommel mit ihrem Mantel unverändert verbleiben.

Bei zusätzlichen, ihre Antriebskräfte auf die Tragriemen des Siebförderbandes übertragenden Antriebsrollen übernehmen diese einen Teil der für den Antrieb des Siebförderbandes benötigten Gesamtantriebskräfte, verringern dadurch die von der Trommel auf das Siebförderband zu übertragenden Antriebskräfte und ermöglichen es auf diese Weise, den Durchmesser der Trommel erheblich zu vermindern. Bei Anordnung der zusätzlichen Antriebsrollen nahe der Trommel und für einen Antriebseingriff mit den Tragriemen im Bereich des rücklaufenden Leertrums des Siebförderbandes ergibt sich dabei eine besonders platzsparende Ausgestaltung, wobei eine derartige Anordnung, die dem Siebförderband zusätzlich noch eine Auslenkung vorgibt, die den Umschlingungswinkel der Trommel durch das Siebförderband vergrössert, die Mitnahmewirkung heraufsetzt, welche die ihrerseits angetrieben umlaufende Trommel auf das Siebförderband ausübt.

Ein Ausführungsbeispiel des Gegenstands der Erfindung ist in der Zeichnung näher veranschaulicht.

Im einzelnen zeigen:

Fig. 1 eine perspektivische Teilansicht eines Siebförderbandes und einer diesem zugeordneten rückwärtigen Umlenkvorrichtung einer ansonsten nicht näher veranschaulichten Kartoffelerntemaschine nach der Erfindung,

Fig. 2 eine abgebrochene perspektivische Teilansicht des linken Endes der Umlenkvorrichtung mit einer als Gitterkörper ausgebildeten Umlenkscheibe,

Fig. 3 eine Teilansicht ähnlich Fig. 2 zur Veranschaulichung einer Umlenkscheibe in Gestalt eines Ringteils mit geschlossener Oberfläche,

Fig. 4 eine Teilansicht ähnlich Fig. 2 oder 3 zur Veranschaulichung einer Umlenkscheibe mit einem auf der Oberfläche des Ringteils vorgesehenen Haftbelag,

Fig. 5 eine perspektivische Teilansicht ähnlich Fig. 1 mit den Tragriemen zugeordneten zusätzlichen Antriebsrollen, und

Fig. 6 eine abgebrochene schematische Seitenansicht zu Fig. 5.

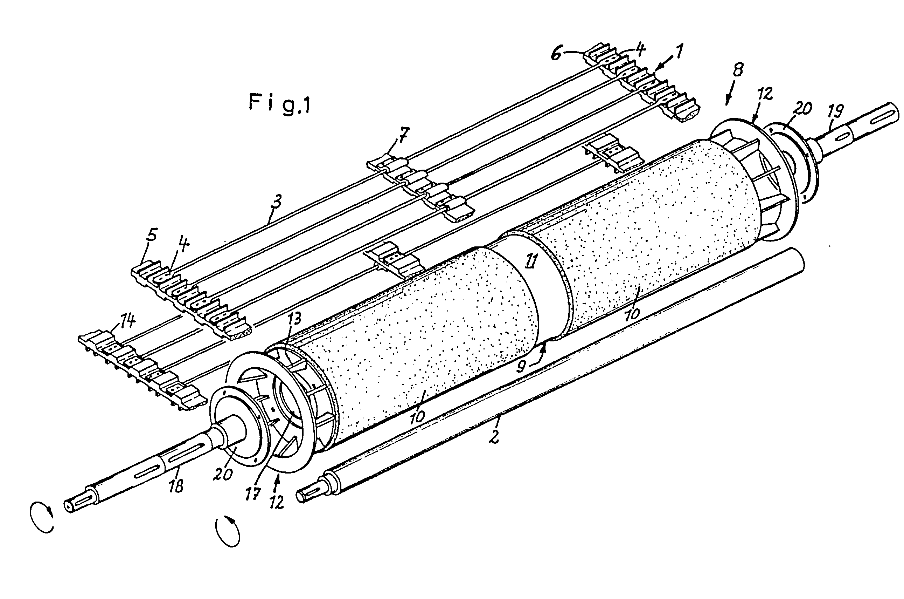

Die Fig. 1 veranschaulicht in lediglich einem Ausschnitt das in Förderrichtung rückwärtige Umlenkende eines Siebförderbandes 1 einer Kartoffelerntemaschine, die ansonsten nicht näher veranschaulicht ist und irgendeine bekannte oder geeignete Ausbildung haben kann. Das Siebförderband 1 schliesst sich an die nicht dargestellte Aufnahmevorrichtung der Kartoffelerntemaschine an, die mit einem oder auch mit mehreren Aufnahmescharen einen aus Erdreich und Kartoffeln bestehenden Damm aus dem Boden aufnimmt und diesen Damm an das Siebförderband 1 übergibt. Von dem Siebförderband 1 werden dann aus dem Damm Erdreich und mit aufgenommene Steine abgesiebt, während sich die Kartoffeln mitsamt ihrem Kraut auf dem Siebförderband in Richtung zum dargestellten rückwärtigen Umlenkende hin bewegen. Dort werden die Kartoffeln an einen weiteren Förderer übergeben, der seinerseits nicht dargestellt ist, während eine mit dem rückwärtigen Umlenkende des Siebförderbandes zusammenwirkende Krautzupfwalze 2 Kartoffelkraut dadurch zumindest zu einem wesentlichen Teil von den Kartoffeln trennt, dass sie Kartoffelkraut zwischen sich und dem Umlenkende des Siebförderbandes 1 einklemmt und getrennt von den Kartoffeln einem Krautsammelförderer zuführt. Ausgestaltungen von Kartoffelerntemaschinen in der vorbeschriebenen Weise sind in zahlreichen Ausführungen hinlänglich bekannt.

Das Siebförderband 1 ist endlos umlaufend ausgebildet und umläuft angetrieben eine vordere, nicht näher veranschaulichte Umlenkvorrichtung, die der Aufnahmevorrichtung benachbart ist, sowie eine rückwärtige, der Aufnahmevorrichtung abgewandte Umlenkvorrichtung, die zugleich den Antrieb des Siebförderbandes 1 übernimmt. Das Siebförderband 1 besteht dabei aus einer Vielzahl von Querstäben 3, deren Enden 4 an längslaufenden aussenliegenden Tragriemen 5, 6 befestigt, z.B. angenietet sind. Bei der dargestellten Ausführung des Siebförderbandes 1 ist ferner noch ein mittiger längslaufender Zwischentragriemen 7 vorgesehen, der zur zusätzlichen Führung und Distanzierung der durchgehenden Querstäbe in deren mittleren Bereich dient. Eine solche Ausführung mit Zwischentragriemen findet insbesondere bei Siebförderbändern 1 Anwendung, die besonders breit sind, wie das bei Siebförderbändern für zweischarige Aufnahmevorrichtungen von Kartoffelerntemaschinen der Fall ist. Siebförderbänder einer solchen Ausbildung sind in zahlreichen Ausführungen für sich bekannt.

Die als Ganzes mit 8 bezeichnete rückwärtige Umlenkvorrichtung umfasst einen Antriebs- und Umlenkkörper, der sich etwa über die Breite des Siebförderbandes 1 erstreckt und mit nicht näher veranschaulichten Antriebsmitteln verbunden ist. Der Antriebs- und Umlenkkörper ist im wesentlichen von einer zylindrischen Trommel 9 gebildet, die auf ihrer Oberfläche in ihrem mit den Querstäben 3 des Siebförderbandes 1 zusammenwirkenden Umfangsbereich mit einem Mantel 10 aus Gummi od. dgl. elastisch nachgiebigem Material versehen ist. Bei der dargestellten Ausführung des Siebförderbandes 1 mit längslaufendem Zwischentragriemen 7 ist der Mantel im Bereich des Zwischentragriemens 7 unterbrochen, und die Trommel 9 bildet in dem Unterbrechungsbereich 11 unmittelbar eine Lauffläche für den Zwischentragriemen 7.

Der Mantel 10 kann aus homogenem Material oder auch aus Schaumstoff bestehen, in welchem Falle der Schaumstoff eine geschlossenporige Oberfläche aufweist. Die Dicke des Mantels 10 ist vorzugsweise gleich oder grösser als der Durchmesser der Querstäbe 3 des Siebförderbandes 1 und beträgt vorteilhaft etwa 15 bis 20 mm. Der Mantel ist entweder als gesondertes Teil ausgebildet und auf die Trommel 9, die aus Metall besteht, aufgeklebt oder aufvulkanisiert, oder er bildet eine z.B. unmittelbar auf die Oberfläche der Trommel 9 aufgeschäumte oder sonstwie aufgebrachte Schicht.

Bei dem in Fig. 1 dargestellten Beispiel ist die Trommel 9 an ihren beiden Enden mit einer koaxialen, je von einem aussenliegenden Tragriemen 5 bzw. 6 umlaufenen Umlenkscheibe 12 versehen, die dort von einem ringförmigen Gitterkörper gebildet ist, der eine von einer Mehrzahl von koaxial und gleichwinklig um den Umfang verteilt angeordneten Stegen 13 gebildete, unterbrochene Lauffläche für den zugeordneten Tragriemen darbietet. Eine solche Ausbildung der Umlenkscheibe ist für Siebförderbandausführungen vorgesehen, die Tragriemen 5, 6 mit an deren Unterseite ausgebildeten Mitnehmernocken 14 besitzt. Die Abstände der Querstege 13 der Umlenkscheiben 12 kann leicht und genau an die Abmessungen und die Abstände der Mitnehmernocken 14 angepasst werden, so dass Auflaufgefahren in diesem Bereich zuverlässig ausgeschlossen werden können.

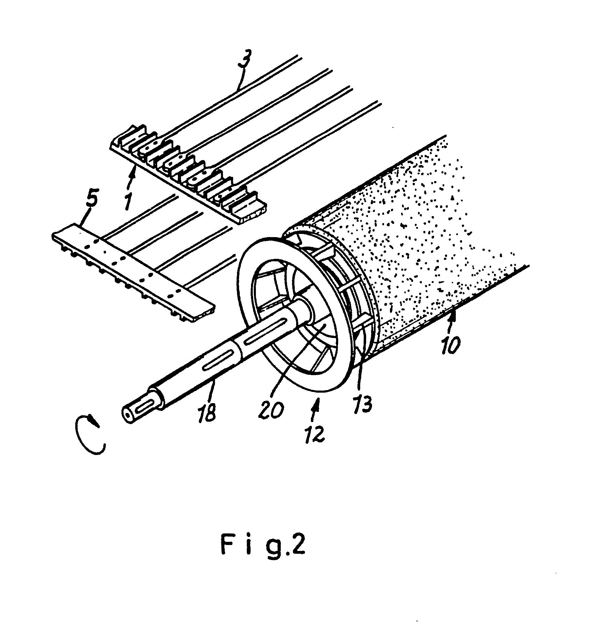

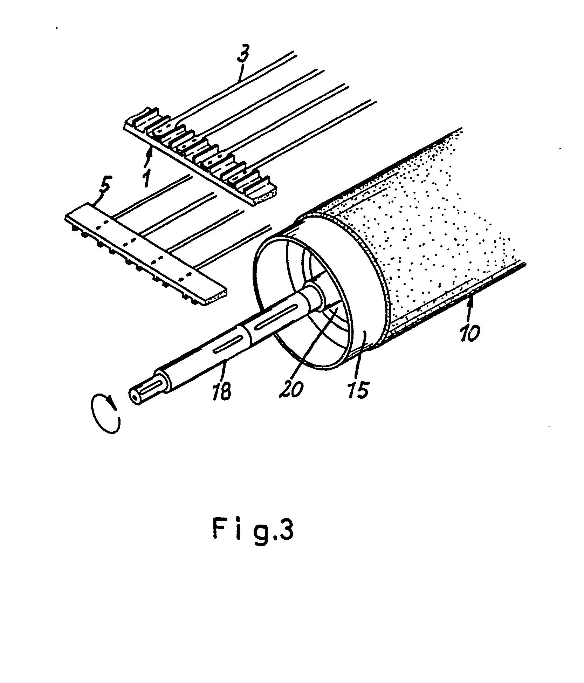

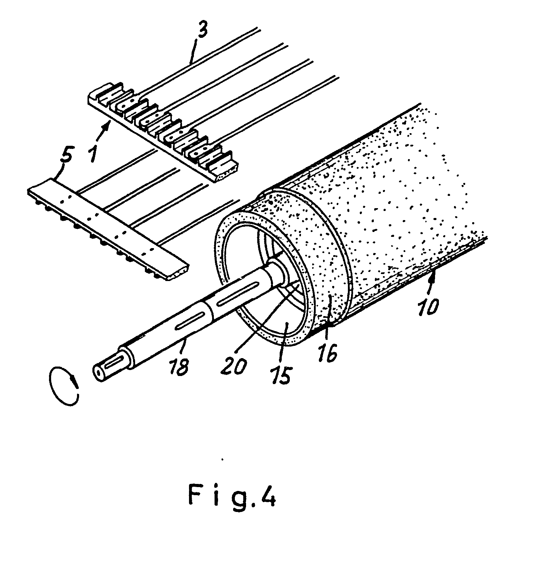

Anstelle der in Fig. 1 und 2 veranschaulichten Umlenkscheiben 12 in Form ringförmiger Gitterkörper können die Umlenkscheiben auch die Form eines zylindrischen, an der Oberfläche geschlossenen Ringteils 15 (Fig. 3) besitzen, wobei dieser Ringteil zusätzlich noch an seiner Oberfläche mit einem Haftbelag 16 (Fig. 4) versehen sein kann. Solche Ausführungen der Umlenkscheiben sind in erster Linie für Siebförderbänder mit Tragriemen bestimmt, die wie bei den Siebförderbandausführungen nach den Fig. 2 bis 4 an ihrer Unterseite im wesentlichen glatte, von Mitnehmernocken freie Lauffläche darbieten.

Die Umlenkscheiben 12, 15 sind jeweils als gesonderte Teile ausgebildet, die auswechselbar an den Enden der Trommel 9 befestigt werden können, damit mit ein und derselben Trommel 9 samt Mantel 10 je nach Bedarf unterschiedliche Umlenkscheiben 12, 15 kombiniert werden können. Bei dem dargestellten Beispiel ist die Trommel 9 mit stirnseitigen radialen Flanschscheiben oder -ringen 17 versehen, an denen die Umlenkscheiben 12, 15 anflanschbar sind. Darüber hinaus können an den Flanschscheiben oder -ringen 17 der Trommel 9 auch Antriebswellenstücke 18, 19 angeflanscht werden, die an ihren jeweils inneren Enden entsprechende Flanschscheiben 20 tragen.

Der Aussendurchmesser der Umlenkscheiben 12, 15, d.h. der Durchmesser ihrer Lauffläche, ist geringer als der Aussendurchmesser des Mantels 10, um den Abstandsverhältnissen der Innenfläche der Tragriemen 5, 6 zu den Unterseiten der Querstäbe 3 des Siebförderbandes 1 Rechnung zu tragen.

Die in Fig. 1 schematisch veranschaulichte Krautzupfwalze 2 ist von irgendeiner geeigneten Ausbildung und üblicherweise endseitig in Schwingen gelagert, die ihrerseits mittels Druck- oder Zugfedern unter einer Vorspannung stehen, durch welche die Krautzupfwalze 2 an den Umfang des Siebförderbandes 1 im rückwärtigen Umlenkbereich angedrückt wird. Die Krautzupfwalze 1 kann dabei jede bekannte oder geeignete Ausgestaltung haben.

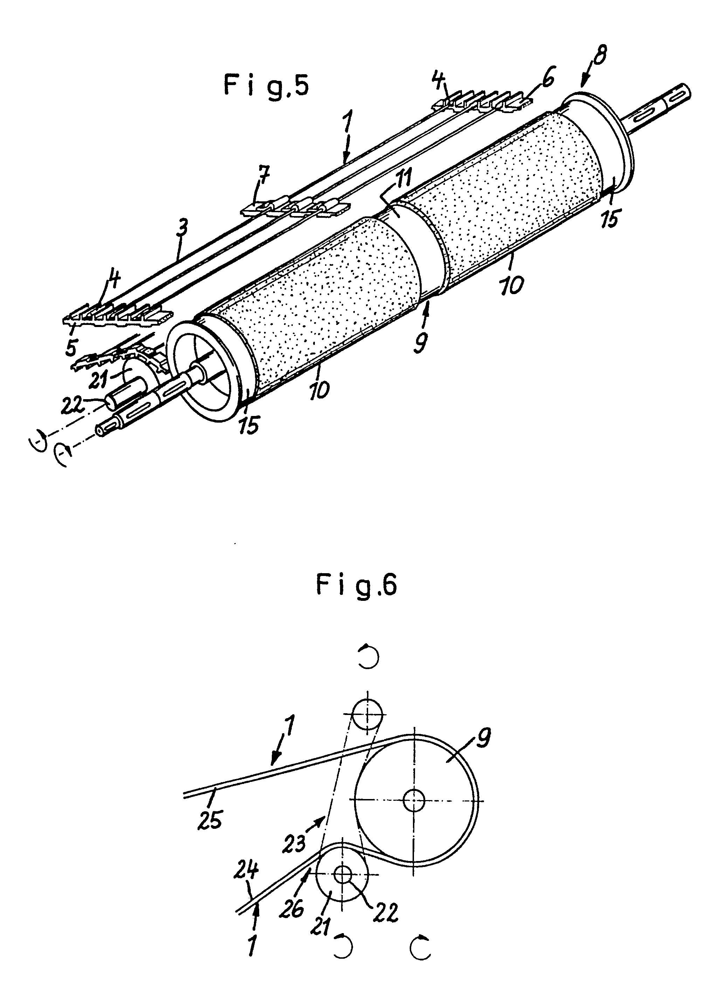

Bei dem Ausführungsbeispiel gemäss Fig. 5 und 6 sind nahe der Trommel 9 zusätzliche, mit den Tragriemen 5, 6 gegebenenfalls auch 7, zusammenwirkende Antriebsrollen 21 vorgesehen, von denen lediglich die mit dem Tragriemen 5 zusammenwirkende Antriebsrolle veranschaulicht ist. Sämtliche Antriebsrollen 21 sind auf einer gemeinsamen Antriebswelle 22 angebracht, die sich parallelachsig zur Trommel 9 erstreckt und ihren Antrieb von einer Antriebsübertragungsvorrichtung 23 erhält, die schematisch in Fig. 6 angedeutet ist. Der Antrieb für die Antriebsrollen 21 ist zweckmässig von der Antriebsquelle für die Trommel 9 abgeleitet.

Die Antriebsrollen 21 sind bei dem dargestellten Beispiel nahe der Trommel 9 und so angeordnet, dass sie mit dem ihnen jeweils zugeordneten Tragriemen 5, 6 bzw. 7 im Bereich des Leertrums 24 des Siebförderbandes 1 in Antriebseingriff stehen. Dieses Leertrum 24 bildet den von der Trommel 9 zur nicht dargestellten vorderen Umlenkvorrichtung unterhalb des oberen Arbeitstrums 25 zurücklaufenden Teil des Siebförderbandes 1.

Die Anordnung der Antriebsrollen 21 ist dabei so getroffen, dass sie aufgrund ihres Antriebseingriffes mit den Tragriemen 5, 6 bzw. 7 dem Siebförderband 1 in einem in Laufrichtung hinter der Trommel 9 gelegenen Bereich eine zum Arbeitstrum 25 hin gerichtete Auslenkung 26 vorgeben, die den Umschlingungswinkel der Trommel 9 durch das Siebförderband 1 auf einen 180° übersteigenden Betrag vergrössert. Mit anderen Worten vermitteln die Antriebsrollen 21 in ihrem Eingriffsbereich mit dem Siebförderband 1 dessen Leertrum 24 einen Abstand zum Arbeitstrum 25, der kleiner ist als der wirksame Durchmesser der Trommel 9.

Die Antriebsrollen 21 übernehmen ihrerseits einen Teil der Gesamtantriebskräfte für das Siebförderband 1, während sie zugleich durch Erhöhung des Umschlingungswinkels der Trommel 9 durch das Siebförderband 1 die Mitnahmewirkung der Trommel 9 auf das Siebförderband 1 erhöhen. Dadurch kann der Durchmesser der Trommel 9 erheblich herabgesetzt werden, ohne dass der benötigte Antrieb für das Siebförderband 1 gefährdet wird. Die Durchmesserverringerung der Trommel 9 verringert deren Herstellungskosten, während gleichzeitig die durch den Durchmesser der Trommel 9 bedingte Fallhöhe für die Kartoffeln, die von dem dargestellten rückwärtigen Ende des Siebförderbandes 1 auf den nachgeordneten weiteren Förderer übergehen, vermindert wird.

**Patentansprüche**

1. Kartoffelerntemaschine mit einem sich an eine Aufnahmevorrichtung anschliessenden endlosen Siebförderband (1), das um Umlenkvorrichtungen angetrieben umläuft und aus einer Vielzahl von Querstäben (3) besteht, deren Enden (4) an längslaufenden aussenliegenden Tragriemen (5, 6) befestigt sind, wobei als rückwärtige, der Aufnahmevorrichtung abgewandte Umlenkvorrichtung (8) ein im Maschinengestell drehbar gelagerter, mit einem Antrieb verbundener, sich etwa über die Breite des Siebförderbandes (1) erstreckender Antriebs- und Umlenkkörper (9, 10) vorgesehen ist, dadurch gekennzeichnet, dass der Antriebs- und Umlenkkörper (9, 10) von einer auf ihrer Oberfläche in ihrem mit den Querstäben (3) des Siebförderbandes (1) zusammenwirkenden Umfangsbereich mit einem Mantel (10) aus Gummi od. dgl. elastisch nachgiebigem Material versehenen zylindrischen Trommel (9) gebildet ist, wobei der Mantel (10) eine Dicke aufweist, die gleich oder grösser ist als der Durchmeser der Querstäbe (3) des Siebförderbandes (1) und etwa 15 bis 20 mm beträgt.

2. Maschine nach Anspruch 1, dadurch gekennzeichnet, dass der Mantel (10) aus Schaumstoff mit geschlossenporiger Oberfläche besteht.

3. Maschine nach Anspruch 1 oder 2, dadurch gekennzeichnet, dass bei Siebförderbändern (1) mit einem längslaufenden Zwischentragriemen (7) der Mantel (10) im Bereich des Zwischentragriemens unterbrochen ist und die Trommel (9) in dem Unterbrechungsbereich (11) unmittelbar eine Lauffläche für den Zwischentragriemen bildet.

4. Maschine nach einem oder mehreren der Ansprüche 1 bis 3, dadurch gekennzeichnet, dass die Trommel (9) an ihren beiden Enden mit einer koaxialen, je von einem aussenliegenden Tragriemen (5, 6) umlaufenden Umlenkscheibe (12, 15) versehen ist.

5. Maschine nach Anspruch 4, dadurch ge-, kennzeichnet, dass die endseitigen Umlenkscheiben von einem zylindrischen, an der Oberfläche geschlossenen Ringteil (15) gebildet sind.

6. Maschine nach Anspruch 5, dadurch gekennzeichnet, dass auf der Oberfläche des Ringteils (15) jeder Umlenkscheibe ein Haftbelag (16) vorgesehen ist.

7. Maschine nach Anspruch 4, dadurch gekennzeichnet, dass die Umlenkscheiben (12) von einem ringförmigen Gitterkörper gebildet sind, der eine von einer Mehrzahl von koaxial und gleichwinklig um den Umfang verteilt angeordneten Stegen (13) gebildete, unterbrochene Lauffläche für den zugeordneten Tragriemen darbietet.

8. Maschine nach einem oder mehreren der Ansprüche 4 bis 7, dadurch gekennzeichnet, dass die Umlenkscheiben (12, 15) als gesonderte, auswechselbar an den Enden der Trommel (9) befestigte Teile ausgebildet sind.

9. Maschine nach einem oder mehreren der Ansprüche 1 bis 8, dadurch gekennzeichnet, dass die Trommel (9) mit stirnseitigen radialen Flanschscheiben oder -ringen (17) versehen ist, an denen die Umlenkscheiben (12, 15) und/oder Antriebswellenstücke (18, 19, 20) anflanschbar sind.

10. Maschine nach einem oder mehreren der Ansprüche 1 bis 9, dadurch gekennzeichnet, dass im Bereich der Trommel (9) zusätzliche, je mit einem Tragriemen (5, 6, 7) des Siebförderbandes (1) zusammenwirkende Antriebsrollen (21) für das Siebförderband vorgesehen sind.

11. Maschine nach Anspruch 10, dadurch gekennzeichnet, dass die Antriebsrollen (21) mit den Tragriemen (5, 6, 7) im Bereich des Leertrums (24) des Siebförderbandes (1) in Antriebseingriff stehen.

12. Maschine nach Anspruch 10 oder 11, dadurch gekennzeichnet, dass die Antriebsrollen (21) dem Siebförderband (1) in einem in dessen Laufrichtung hinter der Trommel (9) gelegenen Bereich eine zum Arbeitstrum (25) hin gerichtete Auslenkung vorgeben, die den Umschlingungswinkel der Trommel durch das Siebförderband vergrössert.

13. Maschine nach einem der Ansprüche 10 bis 12, dadurch gekennzeichnt, dass die Antriebsrollen (21) am Umfang einen elastisch nachgiebigen Belag aufweisen.

## Claims

1. A potato harvester having an endless screening conveyor belt (1) which follows on a picking up device and which is driven in rotation round reversing devices and consists of a plurality of transverse bars (3), the ends (4) of which are secured to external supporting belts (5, 6) extending longitudinally, wherein a driving and reversing member (9, 10) which is mounted for rotation in the machine frame, and which is connected to a drive and which extends substantially over the width of the screening conveyor belt (1), is provided as a rear reversing device (8) remote from the picking up device, characterised in that the driving and reversing member (9, 10) is formed from a cylindrical drum (9) which is provided with a covering (10) of rubber or the like resiliently flexible material on its surface in its circumferential region cooperating with the transverse bars (3) of the screening conveyor belt (1), the covering (10) having a thickness which is equal to or greater than the diameter of the transverse bars (3) of the screening conveyor belt (1) and which amounts to about 15 to 20 mm.

2. A machine as claimed in Claim 1, characterised in that the covering (10) consists of foam material with a closed-pore surface.

3. A machine as claimed in Claim 1 or 2, characterised in that with a screening conveyor belt (1) having an intermediate supporting belt (7) extending longitudinally, the covering (10) is interrupted in the region of the intermediate supporting belt and the drum (9) forms directly a contact surface for the intermediate supporting belt in the region (11) of the interruption.

4. A machine as claimed in any one of Claims 1 to 3, characterised in that the drum (9) is provided, at each of its two ends, with a coaxial guide pulley (12, 15) round which an external supporting belt (5, 6) runs.

5. A machine as claimed in Claim 4, characterised in that the guide pulleys at the ends are formed from a cylindrical annular member (15) the surface of which is closed.

6. A machine as claimed in Claim 5, characterised in that a non-slip cover (16) is provided on the surface of the annular member (15) of each guide pulley.

7. A machine as claimed in Claim 4, characterised in that the guide pulleys (12) are formed from an annular lattice member which offers the associated supporting belt an interrupted contact surface formed from a plurality of webs (13) disposed coaxially and distributed equiangularly round the circumference.

8. A machine as claimed in any one of Claims 4 to 7, characterised in that the guide pulleys (12, 15) are constructed in the form of separate parts which are replaceably secured to the ends of the drum (9).

9. A machine as claimed in any one of Claims 1 to 8, characterised in that the drum (9) is provided with radial shrouding discs or rings (17) at the ends, on which the guide pulleys (12, 15) and/or parts of drive shafts (18, 19, 20) can be flange-mounted.

10. A machine as claimed in any one of Claims 1 to 9, characterised in that additional driving pulleys (21), each cooperating with one supporting belt (5, 6, 7) of the screening conveyor belt (1) are provided for the screening conveyor belt in the region of the drum (9).

11. A machine as claimed in Claim 10, characterised in that the driving pulleys (21) are in driving engagement with the supporting belts (5, 6, 7) in the region of the idle strand (24) of the screening conveyor belt (1).

12. A machine as claimed in Claim 10 or 11, characterised in that the driving pulleys (21) cause a deflection of the screening conveyor belt (1) towards the working strand (25) in a region situated after the drum (9) in its direction of travel, which deflection increases the angle of wrap-round of the drum by the screening conveyor belt.

13. A machine as claimed in any one of Claims 10 to 12, characterised in that the driving pulleys (21) comprise a resiliently flexible cover at the circumference.

**Revendications**

1. Récolteuse de pommes de terre comportant un tablier secoueur sans fin (1) qui se raccorde à un dispositif récolteur et qui passe, entraîné, autour de dispositifs de renvoi et est formé d'un grand nombre de barreaux transversaux (3) dont les extrémités (4) sont fixées à des courroies de support extérieures longitudinales (5, 6), étant entendu qu'à titre de dispositif de renvoi postérieur (8), opposé au dispositif récolteur, est prévu un élément d'entraînement et de renvoi (9, 10) monté à rotation dans le bâti de la machine, relié à un mécanisme d'entraînement et s'étendant environ sur toute la largeur du tablier secoueur (1), caractérisée en ce que l'élément d'entraînement et de renvoi (9, 10) est formé par un tambour cylindrique (9) pourvu sur sa surface, dans sa zone périphérique coopérant avec les barreaux transversaux (3) du tablier secoueur (1), d'un manchon (10) en caoutchouc ou en une autre matière élastiquement flexible, le manchon (10) ayant une épaisseur qui est égale ou supérieure au diamètre des barreaux transversaux (3) du tablier secoueur (1) et qui est d'environ 15 à 20 mm.

2. Récolteuse suivant la revendication 1, caractérisée en ce que le manchon (10) est en matière expansée à surface à cellules fermées.

3. Récolteuse suivant la revendication 1 ou 2, caractérisée en ce que, dans le cas de tabliers secoueures (1) comportant une courroie intermédiaire longitudinale (7), le manchon (10) est interrompu dans la zone de la courroie de support intermédiaire et le tambour (9) forme directement une surface de roulement pour la courroie de support intermédiaire dans la zone (11) de l'interruption.

4. Récolteuse suivant l'une quelconque des revendications 1 à 3, caractérisée en ce que le tambour (9) est pourvu, à ses deux extrémités, d'une poulie de renvoi (12, 15) coaxiale autour de chacune desquelles passe une courroie extérieure (5, 6).

5. Récolteuse suivant la revendication 4, caractérisée en ce que les poulies de renvoi d'extrémité sont formées par un élément annulaire cylindrique (15) à surface imperforée.

6. Récolteuse suivant la revendication 5, caractérisée en ce que la surface de l'élément annulaire (15) de chaque poulie de renvoi est pourvue d'une garniture adhérente (16).

7. Récolteuse suivant la revendication 4, caractérisée en ce que les poulies de renvoi (12) sont formées par un corps en treillage annulaire qui présente une surface de roulement interrompue formée par plusieurs barrettes (13) coaxiales et réparties équiangulairement dans le sens circonférentiel.

8. Récolteuse suivant l'une quelconque des revendications 4 à 7, caractérisée en ce que les poulies de renvoi (12, 15) ont la forme d'éléments séparés fixés de manière remplaçable sur les extrémités du tambour (9).

9. Récolteuse suivant l'une quelconque des revendications 1 à 8, caractérisée en ce que le tambour (9) est pourvu d'anneaux ou de flasques à bride radiaux d'about (17), sur lesquels les poulies de renvoi (12, 15) et/ou des bouts d'arbre d'entraînement (18, 19, 20) peuvent être vissés.

10. Récolteuse suivant l'une quelconque des revendications 1 à 7, caractérisée en ce que dans la zone du tambour (9), des rouleaux d'entraînement supplémentaires (21) coopérant chacun avec une courroie de support (5, 6, 7) du tablier secoueur (1) sont prévus pour le tablier secoueur.

11. Récolteuse suivant la revendication 10, caractérisée en ce que les rouleaux d'entraînement (21) sont en prise d'entraînement avec les courroies de support (5, 6, 7) dans la zone du brin inférieur (24) du tablier secoueur (1).

12. Récolteuse suivant la revendication 10 ou 11, caractérisée en ce que les rouleaux d'entraînement (21) confèrent au tablier secoueur (1), dans une zone située dans le sens de son défilement derrière le tambour (9), une déviation orientée vers le brin de travail (25), qui augmente l'angle de contact du tablier secoueur avec le tambour.

13. Récolteuse suivant l'une quelconque des revendications 10 à 12, caractérisée en ce que les rouleaux d'entraînement (21) présentent sur leur périphérie, une garniture élastiquement flexible.

Fig.1

Fig.2

**Fig.3**

Fig.4

Fig.5

Fig.6